# EUROPEAN PATENT APPLICATION

(11) **EP 4 508 985 A1**
(43) Date of publication of application: **19.02.2025**
(21) Application number: 23788177.6
(22) Date of filing: 31.03.2023
(51) Int. Cl.: A23L 5/00, A23J 3/00, A23J 3/14, A23L 13/00, A23L 29/244, A23L 29/262, A23L 29/269

(54) **EMULSIFIED GEL, PRODUCTION METHOD FOR EMULSIFIED GEL, PROCESSED MEAT-LIKE FOOD, AND PRODUCTION METHOD FOR PROCESSED MEAT-LIKE FOOD**

(30) Priority: 15.04.2022 JP 2022067605
(71) Applicant: Nissui Corporation, Tokyo 105-8676 (JP)
(72) Inventor: YOKOTA, Nobuhiro, Hachioji-shi, Tokyo 192-0991 (JP); SHIGEMOTO, Ayane, Hachioji-shi, Tokyo 192-0991 (JP); HORIUCHI, Yu, Hachioji-shi, Tokyo 192-0991 (JP)
(74) Representative: Mewburn Ellis LLP
(86) International application number: PCT/JP2023/013501
(87) International publication number: WO 2023/199757

(57) **Abstract**

Provided are an emulsified gel advantageous for progress of gelation during production, a method for producing the emulsified gel, processed meat-like food product containing the emulsified gel, and a method for producing the processed meat-like food product containing the emulsified gel.

The emulsified gel contains a heat-denatured vegetable protein, water, and a fat or oil, wherein a content of the heat-denatured vegetable protein relative to a content of the fat or oil is 0.1 to 6% by mass. The method for producing an emulsified gel includes the steps of: preparing an ungelled emulsion comprising a denatured vegetable protein, water, and a fat or oil; and heating the ungelled emulsion at a heating temperature of 60 to 100°C to prepare an emulsified gel and/or emulsified gel precursor. The processed meat-like food product contains a textured vegetable protein and the emulsified gel. The method for producing a processed meat-like food product including the step of: mixing the textured vegetable protein and the emulsified gel to prepare a mixture.

## Description

### Technical Field

The present disclosure relates to an emulsified gel, a method for producing an emulsified gel, a processed meat-like food product, and a method for producing a processed meat-like food product.

### Background Art

In recent years, the demand for a processed meat-like food product in which at least a part of meat in a processed meat food product is replaced with vegetable protein (hereinafter, also simply referred to as "processed meat-like food product") has been increasing from the viewpoint of increasing health awareness and reducing environmental load. The texture of the processed meat-like food product is excessively uniform and tends to lack juiciness as compared with a processed meat food product containing meat as a main ingredient.

To improve the juiciness of a processed meat-like food product, a technique for localizing moisture and oil content by adding an emulsified gel (emulsion gel) to the processed meat-like food product is known. For example, Patent Literature 1 discloses a method for producing a frozen meat-like processed food, the method including the step of adding emulsion curd containing soy protein, water, and fat or oil, the emulsion curd having been homogenized at a maximum temperature of 30 to 55°C, to a meat-like processed food dough.

### Document List

### Patent Literature

Patent Literature 1: Japanese Patent Application Laid-Open No. 2018-029565

### Summary of Invention

### Technical Problem

Depending on target properties of a emulsified gel, it is sometimes desirable in production of the emulsified gel that the content of vegetable protein relative to the content of fat or oil is small. However, if the amount of the vegetable protein used relative to the fat or oil is small, gelation may not proceed sufficiently.

The present disclosure provides an emulsified gel advantageous for progress of gelation during production, a method for producing the emulsified gel, processed meat-like food product containing the emulsified gel, and a method for producing the processed meat-like food product containing the emulsified gel.

### Solution to Problem

The present disclosure is summarized as follows.
[1] An emulsified gel containing a heat-denatured vegetable protein, water, and a fat or oil, wherein a content of the heat-denatured vegetable protein relative to a content of the fat or oil is 0.1 to 6% by mass.
[2] The emulsified gel according to [1], wherein the content of the heat-denatured vegetable protein relative to the content of the fat or oil is 1 to 3% by mass.
[3] The emulsified gel according to [1] or [2], wherein a content of the water is 10 to 80% by mass.
[4] The emulsified gel according to any one of [1] to [3], wherein the content of fat or oil is 20 to 85% by mass.
[5] The emulsified gel according to any one of [1] to [4], wherein the heat-denatured vegetable protein contains a heat-denatured product of soy protein.
[6] The emulsified gel according to any one of [1] to [5], wherein the fat or oil contains at least one selected from the group consisting of coconut oil, palm oil, canola oil, soybean oil, rice oil, corn oil, sesame oil, and olive oil.
[7] The emulsified gel according to any one of [1] to [6], further containing a polysaccharide.
[8] The emulsified gel according to [7], wherein a content of the polysaccharide is 0.01 to 1 parts by mass based on 100 parts by mass of a total content of the heat-denatured vegetable protein, the water, and the fat or oil.
[9] The emulsified gel according to any one of [1] to [8], which is a frozen product.
[10] A method for producing an emulsified gel, including the steps of: (A) preparing an ungelled emulsion comprising a low-denatured vegetable protein, water, and a fat or oil; and (B) heating the ungelled emulsion at a heating temperature of 60 to 100°C to prepare an emulsified gel and/or emulsified gel precursor.
[11] The method for producing an emulsified gel according to [10], wherein a heating time in step (B) is one minute or longer after reaching the heating temperature.
[12] The method for producing an emulsified gel according to [10] or [11], further including the step of (C) freezing the emulsified gel and/or emulsified gel precursor.
[13] The method for producing an emulsified gel according to any one of [10] to [12], wherein a content of the low-denatured vegetable protein relative to a content of the fat or oil in the ungelled emulsion to be obtained in step (A) is 0.1 to 6% by mass.
[14] The method for producing an emulsified gel according to any one of [10] to [13], wherein a content of the water in the ungelled emulsion to be obtained in step (A) is 10 to 80% by mass.
[15] The method for producing an emulsified gel according to any one of [10] to [14], wherein a content of the fat or oil in the ungelled emulsion to be obtained in step (A) is 20 to 85% by mass.
[16] The method for producing an emulsified gel according to any one of [10] to [15], wherein the low-denatured vegetable protein comprises soy protein.
[17] The method for producing an emulsified gel according to any one of [10] to [16], wherein the fat or oil contains at least one selected from the group consisting of coconut oil, palm oil, canola oil, soybean oil, rice oil, corn oil, sesame oil, and olive oil.
[18] The method for producing an emulsified gel according to any one of [10] to [17], wherein the ungelled emulsion to be obtained in step (A) further contains a polysaccharide.
[19] The method for producing an emulsified gel according to [18], wherein a content of the polysaccharide in the ungelled emulsion to be obtained in step (A) is 0.01 to 1 parts by mass based on 100 parts by mass of a total content of the low-denatured vegetable protein, the water, and the fat or oil.
[20] A processed meat-like food product comprising:
   a textured vegetable protein; and an emulsified gel containing a heat-denatured vegetable protein, water, and a fat or oil, wherein a content of the heat-denatured vegetable protein relative to a content of the fat or oil is 0.1 to 6% by mass.
[21] The processed meat-like food product according [20], wherein the textured vegetable protein contains textured vegetable protein derived from at least one selected from the group consisting of a soybean, pea, and wheat gluten.
[22] The processed meat-like food product according to [20] or [21], wherein a content of the water in the emulsified gel is 10 to 80% by mass.
[23] The processed meat-like food product according to any one of [20] to [22], wherein the content of the fat or oil in the emulsified gel is 20 to 85% by mass.
[24] The processed meat-like food product according to any one of [20] to [23], wherein the heat-denatured vegetable protein contains a heat-denatured product of soy protein.
[25] The processed meat-like food product according to any one of [20] to [24], wherein the fat or oil contains at least one selected from the group consisting of coconut oil, palm oil, canola oil, soybean oil, rice oil, corn oil, sesame oil, and olive oil.
[26] The processed meat-like food product according to any one of [20] to [25], wherein the emulsified gel further contains a polysaccharide.
[27] The processed meat-like food product according to [26], wherein a content of the polysaccharide in the emulsified gel is 0.01 to 1 parts by mass based on 100 parts by mass of a total content of the heat-denatured vegetable protein, the water, and the fat or oil.
[28] The processed meat-like food product according to any one of [20] to [27], wherein the content of the emulsified gel is 1 to 50% by mass.
[29] The processed meat-like food product according to any one of [20] to [28], wherein a deliquoring rate at break is 3 to 10% by mass.
[30] A method for producing a processed meat-like food product, including the step of (D) mixing the following to prepare a mixture:
   a textured vegetable protein; and an emulsified gel containing a heat-denatured vegetable protein, water, and a fat or oil, wherein a content of the heat-denatured vegetable protein relative to a content of the fat or oil is 0.1 to 6% by mass.
[31] The method for producing a processed meat-like food product according to [30], wherein in step (D), the emulsified gel is added and mixed as a frozen product.
[32] The method for producing a processed meat-like food product according to [30] or [31], wherein the content of the heat-denatured vegetable protein relative to the content of the fat or oil in the emulsified gel is 1 to 3% by mass.
[33] The method for producing a processed meat-like food product according to any one of [30] to [32], wherein the content of the water in the emulsified gel is 10 to 80% by mass.
[34] The method for producing a processed meat-like food product according to any one of [30] to [33], wherein the content of the fat or oil in the emulsified gel is 20 to 85% by mass.
[35] The method for producing a processed meat-like food product according to any one of [30] to [34], wherein the heat-denatured vegetable protein contains a heat-denatured product of soy protein.
[36] The method for producing a processed meat-like food product according to any one of [30] to [35], wherein the fat or oil contains at least one selected from the group consisting of coconut oil, palm oil, canola oil, soybean oil, rice oil, corn oil, sesame oil, and olive oil.
[37] The method for producing a processed meat-like food product according to any one of [30] to [36], wherein the emulsified gel further contains a polysaccharide.
[38] The method for producing a processed meat-like food product according to [37], wherein a content of the polysaccharide in the emulsified gel is 0.01 to 1 parts by mass based on 100 parts by mass of a total content of the heat-denatured vegetable protein, the water, and the fat or oil.
[39] The method for producing a processed meat-like food product according to any one of [30] to [38], wherein in step (D), a content of the emulsified gel in the mixture is 1 to 50% by mass.
[40] The method for producing a processed meat-like food product according to any one of [30] to [39], further including the step of (E) freezing the mixture.

### Description of Embodiments

### [Emulsified Gel]

The emulsified gel of the present disclosure, also referred to as an "emulsion gel", contains a heat-denatured vegetable protein, water, and a fat or oil, wherein the content of the heat-denatured vegetable protein relative to the content of the fat or oil is 0.1 to 6% by mass. In the present disclosure, the "heat-denatured vegetable protein" refers to a vegetable protein that has been partially or entirely denatured by intentional heating. By including the heat-denatured vegetable protein in the emulsified gel, gelation during production is facilitated even when the content of the vegetable protein relative to the content of the fat or oil is small.

As the heat-denatured vegetable protein, for example, a heat-denatured product of protein derived from grains or beans can be used. As the grains, for example, fruits (seeds) of plants belonging to the Poaceae can be used. As the beans, for example, fruits (seeds) of leguminous plants can be used. Examples of the plants belonging to the Poaceae include wheat, barley, oat, rye, adlay, rice, and maize. Examples of the leguminous plants include soybean, fava bean, pea, common bean, chickpea, winged bean, lentil, peanut (*Arachis hypogaea*), red bean, and mung bean (green gram). Particularly, a heat-denatured product of at least one protein selected from the group consisting of, for example, soy protein, pea protein, and wheat protein can be used as the heat-denatured vegetable protein. These vegetable protein has been shown to be safe and are easy to use. Typically, the heat-denatured vegetable protein tends to be more advantageous for the progress of emulsification and gelation in the case of being or containing a heat-denatured product of soy protein.

The protein described above as a raw material can be either an isolated protein or a powdered protein. As the isolated protein, for example, an acid- or alcohol-treated isolated protein can be used. As the powdered protein, for example, a dry powdered protein can be used. Particularly, commercially available isolated soy protein, for example, can be used as the soy protein. In the present disclosure, the "isolated soy protein" refers to a product obtained by extracting water-soluble proteins from a material derived from soybeans, precipitating the proteins with an acid, and collecting the precipitate, followed by neutralization and pulverization.

The content of the heat-denatured vegetable protein in the emulsified gel may be, for example, 0.1% by mass or more, 0.3% by mass or more, 0.5% by mass or more, 0.7% by mass or more, or 0.8% by mass or more. Typically, the higher the content of the heat-denatured vegetable protein in the emulsified gel, the more advantageous the progress of emulsification and gelation tends to be.

The content of the heat-denatured vegetable protein in the emulsified gel may be, for example, 5% by mass or less, 4% by mass or less, 3% by mass or less, 2% by mass or less, or 1.5% by mass or less. Typically, the lower the content of the heat-denatured vegetable protein in the emulsified gel, the more easily the juiciness of the product is enhanced at the time of eating.

The upper limit and the lower limit of the content of the heat-denatured vegetable protein in the emulsified gel can be arbitrarily combined within the scope of the present disclosure. Specifically, the content of the heat-denatured vegetable protein in the emulsified gel may be, for example, 0.1 to 5% by mass, 0.3 to 4% by mass, 0.5 to 3% by mass, 0.7 to 2% by mass, or 0.8 to 1.5% by mass. When the content of the heat-denatured vegetable protein in the emulsified gel is within an appropriate range, the balance between the ease of the progress of emulsification and gelation and the juiciness at the time of eating is easily improved.

The content of the water in the emulsified gel may be, for example, 10% by mass or more, 15% by mass or more, 20% by mass or more, 25% by mass or more, or 30% by mass or more. The higher the content of the water in the emulsified gel, the easier it is to impart a smooth and soft texture to the processed meat-like food product. The content of the water in the emulsified gel may be, for example, 80% by mass or less, 60% by mass or less, 50% by mass or less, 45% by mass or less, or 40% by mass or less. The lower the content of the water in the emulsified gel, the easier it is to impart a mild and thick texture to the processed meat-like food product. It should be noted that in the present disclosure, the "content of the water" also includes the content of ice.

The upper limit and the lower limit of the content of the water in the emulsified gel can be arbitrarily combined within the scope of the present disclosure. Specifically, the content of the water in the emulsified gel may be, for example, 10 to 80% by mass, 15 to 60% by mass, 20 to 50% by mass, 25 to 45% by mass, or 30 to 40% by mass.

As the fat or oil, any fat or oil to be normally used for food additive applications can be used. For example, a fat or oil having a saturation degree of 50 or more, having a melting point of 20°C or higher, containing 20% by mass or less of fatty acids having 18 or more carbon atoms, or containing 80% by mass or more of glycerides in the fat or oil can be used. The fat or oil may include at least one selected from the group consisting of, for example, coconut oil, palm oil, canola oil, soybean oil, rice oil, corn oil, sesame oil, and olive oil. The fat or oil may be an animal fat or oil. Typically, the handling property is easily improved by using a fat or oil that is solid at normal temperature, such as coconut oil and palm oil.

The content of the fat or oil in the emulsified gel may be, for example, 20% by mass or more, 30% by mass or more, 45% by mass or more, 50% by mass or more, or 55% by mass or more. The higher the content of the fat or oil in the emulsified gel, the easier it is to impart thick juiciness to the processed meat-like food product when chewed. The content of the fat or oil in the emulsified gel may be, for example, 85% by mass or less, 80% by mass or less, 75% by mass or less, 70% by mass or less, or 65% by mass or less. The lower the content of the fat or oil in the emulsified gel, the easier it is to impart a fresh and light texture to the processed meat-like food product.

The upper limit and the lower limit of the content of the fat or oil in the emulsified gel can be arbitrarily combined within the scope of the present disclosure. Specifically, the content of the fat or oil in the emulsified gel may be, for example, 20 to 85% by mass, 30 to 80% by mass, 45 to 75% by mass, 50 to 70% by mass, or 55 to 65% by mass.

The content of the heat-denatured vegetable protein relative to the content of the fat or oil in the emulsified gel may be 0.2% by mass or more, 0.5% by mass or more, 1% by mass or more, or 1.3% by mass or more. Typically, the higher the content of the heat-denatured vegetable protein relative to the content of the fat or oil in the emulsified gel, the more advantageous the progress of emulsification and gelation tends to be.

The content of the heat-denatured vegetable protein relative to the content of the fat or oil in the emulsified gel may be 5% by mass or less, 4% by mass or less, 3% by mass or less, or 2% by mass or less. Typically, the lower the content of the heat-denatured vegetable protein relative to the content of the fat or oil in the emulsified gel, the more easily the juiciness of the processed meat-like food product is enhanced at the time of eating.

The upper limit and the lower limit of the content of the heat-denatured vegetable protein relative to the content of the fat or oil in the emulsified gel can be arbitrarily combined within the scope of the present disclosure. Specifically, the content of the heat-denatured vegetable protein relative to the content of the fat or oil in the emulsified gel may be, for example, 0.2 to 5% by mass, 0.5 to 4% by mass, 1 to 3% by mass, or 1.3 to 2% by mass. When the content of the heat-denatured vegetable protein relative to the content of the fat or oil in the emulsified gel is within an appropriate range, the balance between the ease of the progress of emulsification and gelation and the juiciness of the processed meat-like food product at the time of eating is easily improved.

The emulsified gel may contain a polysaccharide such as a thickening polysaccharide or a binder in addition to the above ingredients. The polysaccharide may be derived from bacteria or plants. The plant-derived polysaccharide may be derived from algae or terrestrial plants. As the polysaccharide, for example, a polysaccharide having a gelation ability by itself can be used. As the polysaccharide, a polysaccharide capable of forming a heat-resistant gel can also be used, for example. The polysaccharide may include at least one selected from the group consisting of, for example, curdlan, deacylated gellan gum, native gellan gum, glucomannan, methyl cellulose, hydroxypropyl methylcellulose, pectin, carrageenan, xanthan gum, agar, guar gum, gum arabic, and sodium alginate.

Typically, it is more advantageous for the progress of gelation when the emulsified gel contains at least one selected from the group consisting of curdlan, deacylated gellan gum, native gellan gum, and glucomannan as the polysaccharide. Typically, when the emulsified gel contains curdlan and/or native gellan gum as the polysaccharide, the emulsified gel may be prevented from being broken and kneaded during the preparation of the processed meat-like food product. In addition, the balance between the effect of reducing fat or oil loss during baking and the effect of imparting juiciness to the processed meat-like food product at the time of eating is easily improved.

The content of the polysaccharide in the emulsified gel may be, for example, 0.01 parts by mass or more, 0.03 parts by mass or more, 0.08 parts by mass or more, 0.1 parts by mass or more, or 0.3 parts by mass or more, based on 100 parts by mass of the total content of the heat-denatured vegetable protein, water, and fat or oil. The higher the content of polysaccharide in the emulsified gel, the more viscous the emulsified gel tends to be. The content of the polysaccharide in the emulsified gel may be, for example, 1 part by mass or less, 0.9 parts by mass or less, 0.8 parts by mass or less, 0.7 parts by mass or less, or 0.6 parts by mass or less, based on 100 parts by mass of the total content of the heat-denatured vegetable protein, water, and fat or oil. The lower the content of polysaccharide in the emulsified gel, the easier it is to impart umami to the processed meat-like food product.

The upper limit and the lower limit of the content of the polysaccharide in the emulsified gel can be arbitrarily combined within the scope of the present disclosure. Specifically, the content of the polysaccharide in the emulsified gel may be, for example, 0.01 to 1 parts by mass, 0.03 to 0.9 parts by mass, 0.08 to 0.8 parts by mass, 0.1 to 0.7 parts by mass, or 0.3 to 0.6 parts by mass, based on 100 parts by mass of the total content of the heat-denatured vegetable protein, water, and fat or oil. When the content of the polysaccharide in the emulsified gel is within an appropriate range, the emulsified gel may be prevented from being broken and kneaded during the preparation of the processed meat-like food product. In addition, the balance between the effect of reducing fat or oil loss during baking and the effect of imparting juiciness to the processed meat-like food product at the time of eating is easily improved.

The emulsified gel may further contain other components to the extent that the effects of the present disclosure are not impaired. The emulsified gel may contain, as the other components, at least one selected from the group consisting of, for example, animal protein, undenatured vegetable protein, sweeteners, spices, salt, flavoring agents, enzymes, colorants, and seasonings.

The emulsified gel may be a frozen product. In the present disclosure, the "frozen product" includes a product at least partially frozen by low-temperature processing. When the emulsified gel is a frozen product, the temperature of the emulsified gel may be 0°C or lower, -5°C or lower, -10°C or lower, or -20°C or lower. The temperature of the emulsified gel may be -35°C or higher, -30°C or higher, or -25°C or higher. The upper limit and the lower limit of the temperature of the emulsified gel can be arbitrarily combined within the scope of the present disclosure.

The emulsified gel may be granular. When the emulsified gel is granular, the particle size of the emulsified gel may be, for example, 0.1 mm or more, 1 mm or more, 5 mm or more, 8 mm or more, or 9 mm or more. The larger the particle size of the emulsified gel, the easier it is to impart juiciness to the processed meat-like food product. The particle size of the emulsified gel may be, for example, 30 mm or less, 25 mm or less, 20 mm or less, 15 mm or less, or 10 mm or less. The smaller the particle size of the emulsified gel, the easier it is to disperse the gel uniformly in the processed meat-like food product.

When the emulsified gel is granular, the upper limit and the lower limit of the particle size of the emulsified gel can be arbitrarily combined within the scope of the present disclosure. Specifically, the particle size of the emulsified gel may be, for example, 0.1 to 30 mm, 1 to 25 mm, 5 to 20 mm, 8 to 15 mm, or 9 to 10 mm. When the particle size of the emulsified gel is within an appropriate range, the emulsified gel may be prevented from being broken and kneaded during the preparation of the processed meat-like food product. In addition, the balance between the effect of reducing fat or oil loss during baking and the effect of imparting juiciness to the processed meat-like food product at the time of eating is easily improved.

In the present disclosure, the "particle size" of the emulsified gel refers to the minor diameter of the emulsified gel, and the "minor diameter" refers to the shortest diameter in the three-dimensional dimensions. Typically, when the emulsified gel has a substantially cylindrical shape, the diameter of the cross-section orthogonal to the axial direction of the emulsified gel is the minor diameter in many cases, but the present disclosure is not limited to this case. When a chopper is used to form the emulsified gel into granules, for example, the particle size of the emulsified gel can be adjusted by selecting the pore size of a perforated plate.

The emulsified gel of the present disclosure can be produced, for example, by a method for producing an emulsified gel described below.

### [Method for Producing Emulsified Gel]

The method for producing an emulsified gel of the present disclosure includes the steps of: (A) preparing an ungelled emulsion containing a low-denatured vegetable protein, water, and a fat or oil; and (B) heating the ungelled emulsion at a heating temperature of 60 to 100°C to prepare an emulsified gel and/or emulsified gel precursor.

### (Step (A))

In step (A), the low-denatured vegetable protein, water (including an aqueous solution), and a fat or oil are mixed and homogenized to obtain an ungelled emulsion. In the present disclosure, the "ungelled emulsion" refers to an emulsion in which gelation has not proceeded or has barely proceeded. In the present disclosure, the "low-denatured vegetable protein" refers to vegetable protein that has not been intentionally denatured by heating or the like, except for inevitable denaturation caused by production processes such as extraction/purification and storage, and also includes undenatured vegetable protein. The degree of denaturation can be evaluated by thermal measurement or the like. In addition, the degree of denaturation can also be suppressed by controlling the process such as extraction/purification. In step (A), the low-denatured vegetable protein acts as an emulsifier.

A typical method of preparing an ungelled emulsion is as follows: First, low-denatured vegetable protein and water are mixed under stirring with a mixer, a food processor, a silent cutter, or the like to obtain a mixture. The water used here may be pure water or an aqueous solution in which a solute is dissolved to such an extent that the solute does not significantly affect the subsequent gelation. As the aqueous solution, for example, an aqueous solution in which the ion concentration of each ion is 1% by mass or less can be used, and examples of the ions include, but are not limited to, sodium ions, potassium ions, calcium ions, and chloride ions. Thereafter, a fat or oil is added thereto, and the mixture is further mixed under stirring to obtain an ungelled emulsion. When a fat or oil that is solid at normal temperature is used, the fat or oil may be added in a molten state. However, the method of preparing an ungelled emulsion is not limited thereto.

In step (A), as the low-denatured vegetable protein, for example, a protein derived from grains or beans can be used. As the grains, for example, fruits (seeds) of plants belonging to the Poaceae can be used. As the beans, for example, fruits (seeds) of leguminous plants can be used. Examples of the plants belonging to the Poaceae include wheat, barley, oat, rye, adlay, rice, and maize. Examples of the leguminous plants include soybean, fava bean, pea, common bean, chickpea, winged bean, lentil, peanut (*Arachis hypogaea*), red bean, and mung bean (green gram). Particularly, in step (A), at least one protein selected from the group consisting of, for example, soy protein, pea protein, and wheat protein can be used as the low-denatured vegetable protein. These low-denatured vegetable protein has been shown to be safe and is easy to use. Typically, the low-denatured vegetable protein tends to be more advantageous for the progress of gelation after step (B) in the case of being or containing soy protein. The protein described above as a raw material can be either an isolated protein or a powdered protein. As the isolated protein, for example, an acid- or alcohol-treated isolated protein can be used. The isolated protein has less impurities and is more homogeneous, which tends to be advantageous for the progress of gelation. As the powdered protein, for example, a dry powdered protein can be used. The dry powdered protein quickly takes up surrounding water and fat or oil and is more homogeneous, which tends to be advantageous for the progress of gelation. Particularly, commercially available isolated soy protein, for example, can be used as the soy protein.

The amount of the low-denatured vegetable protein to be used in step (A), i.e., the content of the low-denatured vegetable protein in the ungelled emulsion to be obtained in step (A) may be, for example, 0.1% by mass or more, 0.3% by mass or more, 0.5% by mass or more, 0.7% by mass or more, or 0.8% by mass or more. Typically, the higher the content of the low-denatured vegetable protein in the ungelled emulsion to be obtained in step (A), the more advantageous emulsification and the progress of gelation after step (B) tend to be.

The content of the low-denatured vegetable protein in the ungelled emulsion to be obtained in step (A) may be, for example, 5% by mass or less, 4% by mass or less, 3% by mass or less, 2% by mass or less, or 1.5% by mass or less. Typically, the lower the content of the low-denatured vegetable protein in the ungelled emulsion to be obtained in step (A), the more easily the juiciness of the processed meat-like food product is enhanced at the time of eating.

The upper limit and the lower limit of the content of the low-denatured vegetable protein in the ungelled emulsion to be obtained in step (A) can be arbitrarily combined within the scope of the present disclosure. Specifically, the content of the low-denatured vegetable protein in the ungelled emulsion to be obtained in step (A) may be, for example, 0.1 to 5% by mass, 0.3 to 4% by mass, 0.5 to 3% by mass, 0.7 to 2% by mass, or 0.8 to 1.5% by mass. When the content of the low-denatured vegetable protein in the ungelled emulsion to be obtained in step (A) is within an appropriate range, the balance between the ease of the emulsification and the progress of gelation after step (B) and the juiciness of the processed meat-like food product at the time of eating is easily improved.

As for the amount of the water to be used in step (A), i.e., the content of the water in the ungelled emulsion to be obtained in step (A), the contents described as the content of the water in the emulsified gel can be applied as they are.

As for the type of the fat or oil to be used in step (A), the contents described as the fat or oil contained in the emulsified gel can be applied as they are. As for the amount of the fat or oil to be used in step (A), i.e., the content of the fat or oil in the ungelled emulsion to be obtained in step (A), the contents described as the content of the fat or oil in the emulsified gel can be applied as they are.

The amount of the low-denatured vegetable protein to be used in step (A) relative to the amount of the fat or oil to be used in step (A), i.e., the content of the low-denatured vegetable protein relative to the content of the fat or oil in the ungelled emulsion to be obtained in step (A) may be 0.2% by mass or more, 0.5% by mass or more, 1% by mass or more, or 1.3% by mass or more. Typically, the higher the content of the low-denatured vegetable protein relative to the content of the fat or oil in the ungelled emulsion to be obtained in step (A), the more advantageous emulsification and the progress of gelation after step (B) tend to be.

The content of the low-denatured vegetable protein relative to the content of the fat or oil in the ungelled emulsion to be obtained in step (A) may be 5% by mass or less, 4% by mass or less, 3% by mass or less, or 2% by mass or less. Typically, the lower the content of the low-denatured vegetable protein relative to the content of the fat or oil in the ungelled emulsion to be obtained in step (A), the more easily the juiciness of the processed meat-like food product is enhanced at the time of eating.

The upper limit and the lower limit of the content of the low-denatured vegetable protein relative to the content of the fat or oil in the ungelled emulsion to be obtained in step (A) can be arbitrarily combined within the scope of the present disclosure. Specifically, the content of the low-denatured vegetable protein relative to the content of the fat or oil in the ungelled emulsion to be obtained in step (A) may be, for example, 0.2 to 5% by mass, 0.5 to 4% by mass, 1 to 3% by mass, or 1.3 to 2% by mass. When the content of the low-denatured vegetable protein relative to the content of the fat or oil in the ungelled emulsion to be obtained in step (A) is within an appropriate range, the balance between the ease of the emulsification and the progress of gelation after step (B) and the juiciness of the processed meat-like food product at the time of eating is easily improved.

In the preparation of the ungelled emulsion, a polysaccharide may be added in addition to the above components. In other words, the ungelled emulsion to be obtained in step (A) may further contain a polysaccharide. As for the type of the polysaccharide that can be contained in the ungelled emulsion to be obtained in step (A), the contents described as the polysaccharide that may be contained in the emulsified gel can be applied as they are. As for the amount of the polysaccharide that may be added in step (A), i.e., the content of the polysaccharide that may be contained in the ungelled emulsion to be obtained in step (A), the contents described as the content of the polysaccharide in the emulsified gel can be applied as they are. However, the description of the content regarding "100 parts by mass of the total content of the heat-denatured vegetable protein, water, and fat or oil" is read as the content regarding "100 parts by mass of the total content of the low-denatured vegetable protein, water, and fat or oil."

In the preparation of the ungelled emulsion, other components may be added to the extent that the effects of the present disclosure are not impaired. As for the other components, the contents described as the other components that may be contained in the emulsified gel can be applied as they are.

### (Step (B))

In step (B), the ungelled emulsion obtained in step (A) is heated at a heating temperature of 60 to 100°C to prepare an emulsified gel and/or emulsified gel precursor. By heating the ungelled emulsion, at least a part of the low-denatured vegetable protein becomes a heat-denatured vegetable protein. In addition, by heating the ungelled emulsion, the ungelled emulsion is gelled to form an emulsified gel or partially gelled to form an emulsified gel precursor. In step (B), any apparatus or equipment such as a kneader, a heater, an oven, a thermostatic bath, a water bath, and an oil bath can be used for heating.

The temperature during heating may be 70°C or higher, 80°C or higher, or 85°C or higher. The temperature during heating may be 99°C or lower, 97°C or lower, or 95°C or lower. The upper limit and the lower limit of the temperature during heating can be arbitrarily combined within the scope of the present disclosure. Specifically, the temperature during heating may be, for example, 70 to 99°C, 80 to 97°C, or 85 to 95°C. When the temperature during heating is within an appropriate range, the heat denaturation of the low-denatured vegetable protein proceeds, and the progress of gelation tends to be more advantageous.

The heating time in step (B) may be, for example, 1 minute or longer, 2 minutes or longer, 5 minutes or longer, 10 minutes or longer, or 30 minutes or longer after reaching the target temperature (the heating temperature). The heating time in step (B) may be, for example, 120 minutes or shorter, 100 minutes or shorter, 80 minutes or shorter, or 70 minutes or shorter. When the heating time is within an appropriate range, the heat denaturation of the low-denatured vegetable protein proceeds, and the progress of gelation tends to be more advantageous.

### (Step (C))

The method for producing an emulsified gel of the present disclosure may further include the step of (C) freezing the emulsified gel and/or emulsified gel precursor. The emulsified gel precursor undergoes further gelation by freezing. In addition, a frozen product of the emulsified gel is obtained by freezing. In the preparation of a processed meat-like food product, as described later, the juiciness of the processed meat-like food product at the time of eating can be easily improved by adding and mixing the emulsified gel in the frozen state.

The temperature during freezing may be 0°C or lower, -5°C or lower, - 10°C or lower, or -15°C or lower. The temperature during freezing may be -35°C or higher, -30°C or higher, or -25°C or higher. The upper limit and the lower limit of the temperature during freezing can be arbitrarily combined within the scope of the present disclosure.

The method for producing an emulsified gel of the present disclosure may further include the step of forming the emulsified gel into granules with a chopper or the like. As for the particle size of the emulsified gel when the emulsified gel is formed into granules, the contents described in the description of the emulsified gel can be applied as they are.

### [Processed Meat-Like Food Product]

The processed meat-like food product of the present disclosure contains a textured vegetable protein and an emulsified gel. The emulsified gel contains a heat-denatured vegetable protein, water, and a fat or oil, wherein the content of the heat-denatured vegetable protein relative to the content of the fat or oil is 0.1 to 6% by mass.

As the textured vegetable protein, granular vegetable protein or fibrous vegetable protein can be used. In the present disclosure, the terms "granular vegetable protein" and "fibrous vegetable protein" are defined according to the Japanese Agricultural Standards by the Ministry of Agriculture, Forestry and Fisheries. Specifically, the "granular vegetable protein" in the present disclosure refers to a vegetable protein that is formed into granules or flakes and has a meat-like texture. In the present disclosure, the "fibrous vegetable protein" refers to a vegetable protein that is formed into a fibrous shape and has a meat-like texture. Typically, the granular vegetable protein has a "hardness" of 500,000 Pa or more as measured under the following conditions. Typically, the fibrous vegetable protein has an "elasticity" of 0.65 or less as measured under the following conditions.

### (Hardness)

Five times the amount of water is added to granular vegetable protein and allowed to stand for 30 minutes to rehydrate the granular vegetable protein, which was then analyzed by a TPA analysis program using a tensipresser (TTP-50BX II, manufactured by Taketomo Electric Co., Ltd.). The maximum stress (average value of n = 10) under load is taken as hardness.

### (Elasticity)

Five times the amount of water is added to fibrous vegetable protein and allowed to stand for 30 minutes to rehydrate the fibrous vegetable protein, which was then analyzed by a TPA analysis program using a tensipresser (TTP-50BX II, manufactured by Taketomo Electric Co., Ltd.). The ratio of load areas when a load is applied twice consecutively is taken as elasticity.

As the textured vegetable protein, for example, a protein derived from grains or beans processed into a textured form can be used. As the grains, for example, fruits (seeds) of plants belonging to the Poaceae can be used. As the beans, for example, fruits (seeds) of leguminous plants can be used. Examples of the plants belonging to the Poaceae include wheat, barley, oat, rye, adlay, rice, and maize. Examples of the leguminous plants include soybean, fava bean, pea, common bean, chickpea, winged bean, lentil, peanut (*Arachis hypogaea*), red bean, and mung bean (green gram). Particularly, as the textured vegetable protein, a textured vegetable protein derived from at least one selected from the group consisting of, for example, a soybean, pea, and wheat gluten can be used. These textured vegetable protein has been shown to be safe and is easy to use. Typically, a textured vegetable protein derived from soybeans has an advantage of easily forming a texture. As the textured vegetable protein, a vegetable protein subjected to an extrusion treatment or a nozzle injection treatment can be used.

As for the emulsified gel, the contents described in the description of the emulsified gel can be applied as they are. In other words, as for the types and contents of the heat-denatured vegetable protein, water, fat or oil, polysaccharide, and other components which are contained or can be contained in the emulsified gel, the contents described in the description of the emulsified gel can be applied as they are.

The content of the emulsified gel in the processed meat-like food product may be, for example, 1% by mass or more, 5% by mass or more, 8% by mass or more, 10% by mass or more, or 12% by mass or more. The content of the emulsified gel in the processed meat-like food product may be, for example, 50% by mass or less, 40% by mass or less, 30% by mass or less, 20% by mass or less, or 18% by mass or less.

The upper limit and the lower limit of the content of the emulsified gel in the processed meat-like food product can be arbitrarily combined within the scope of the present disclosure. Specifically, the content of the emulsified gel in the processed meat-like food product may be, for example, 1 to 50% by mass, 5 to 40% by mass, 8 to 30% by mass, 10 to 20% by mass, or 12 to 18% by mass. When the content of the emulsified gel in the processed meat-like food product is within an appropriate range, the balance between the effect of reducing fat or oil loss during baking and the effect of imparting juiciness to the processed meat-like food product at the time of eating is easily improved.

In the processed meat-like food product of the present disclosure, the deliquoring rate at break may be 3% by mass or more, 3.3% by mass or more, 3.5% by mass or more, or 4% by mass or more. In the processed meat-like food product of the present disclosure, the deliquoring rate at break may be 10% by mass or less, 9% by mass or less, 8% by mass or less, or 7% by mass or less. The upper limit and the lower limit of deliquoring rate at break can be arbitrarily combined within the scope of the present disclosure. The deliquoring rate at break can be evaluated, for example, by the methods described in Examples.

The processed meat-like food product of the present disclosure may contain, in addition to the textured vegetable protein and emulsified gel, other raw materials to the extent that the effects of the present disclosure are not impaired. The processed meat-like food product of the present disclosure may contain at least one selected from the group consisting of, for example, water, fruit juice, vegetables, starch, fat or oil, seasonings, spices, thickeners, colorants, flavors, enzymes, binders, and texture-imparting agents as the other ingredients. For example, defatted soybean flour and wheat gluten may be used as the binders. The processed meat-like food product of the present disclosure may further contain a non-textured vegetable protein.

The processed meat-like food product of the present disclosure may further contain meat depending on the application. In other words, the processed meat-like food product of the present disclosure may be a processed meat-like food product in which not all but only a part of the animal meat in the processed meat food product is replaced with vegetable protein. The processed meat-like food product of the present disclosure may contain at least one selected from the group consisting of, for example, beef, pork, horse meat, lamb meat, goat meat, and chicken meat, as animal meat.

The processed meat-like food product of the present disclosure can be used as an alternative to any meat-containing processed meat food products (including, for example, hamburger steak, meatball, steamed dumpling, meat loaf, or grilled chicken meatball). The processed meat-like food product of the present disclosure can be produced, for example, by a method for producing a processed meat-like food product described below.

### [Method for Producing Processed Meat-Like Food Product]

The method for producing a processed meat-like food product of the present disclosure includes the step of: (D) mixing a textured vegetable protein and an emulsified gel to prepare a mixture. The emulsified gel contains a heat-denatured vegetable protein, water, and a fat or oil, wherein a content of the heat-denatured vegetable protein relative to a content of the fat or oil is 0.1 to 6% by mass.

### (Step (D))

In step (D), for example, the textured vegetable protein, emulsified gel, and other raw materials as necessary are mixed to prepare a mixture (mixed patty).

As for the textured vegetable protein and the other components, the contents described in the description of the processed meat-like food product can be applied as they are. As for the emulsified gel, the contents described in the description of the emulsified gel can be applied as they are. In other words, as for the types and contents of the heat-denatured vegetable protein, water, fat or oil, polysaccharide, and other raw materials which are contained or can be contained in the emulsified gel, the contents described in the description of the emulsified gel can be applied as they are.

In step (D), the respective components may be mixed such that the content of the emulsified gel in the mixture is, for example, 1 to 50% by mass.

In step (D), the respective components may be mixed such that the content of the emulsified gel in the mixture is, for example, 1% by mass or more, 5% by mass or more, 8% by mass or more, 10% by mass or more, or 12% by mass or more. In step (D), the respective components may be mixed such that the content of the emulsified gel in the mixture is, for example, 50% by mass or less, 40% by mass or less, 30% by mass or less, 20% by mass or less, or 18% by mass or less.

The upper limit and the lower limit of the content of the emulsified gel in the mixture can be arbitrarily combined within the scope of the present disclosure. Specifically, the content of the emulsified gel in the mixture may be, for example, 1 to 50% by mass, 5 to 40% by mass, 8 to 30% by mass, 10 to 20% by mass, or 12 to 18% by mass. When the content of the emulsified gel in the mixture is within an appropriate range, the balance between the effect of reducing fat or oil loss during baking and the effect of imparting juiciness to the processed meat-like food product at the time of eating is easily improved.

In step (D), the emulsified gel may be added and mixed as a frozen product. Alternatively, the emulsified gel may be added in the form of granules. As for the temperature of the emulsified gel when added as a frozen product and the particle size of the emulsified gel when added as granules, the contents described in the description of the emulsified gel can be applied as they are.

In step (D), the juiciness of the processed meat-like food product at the time of eating can be easily improved by adding and mixing the emulsified gel as a frozen product, which is considered to be because the addition of the frozen product prevents the emulsified gel from being broken and kneaded into the mixture during mixing, resulting in a considerable amount of the emulsified gel retained until eating.

In step (D), the components may be mixed simultaneously, or after mixing a part of the components, the remaining components may be additionally mixed. The mixing may be performed manually or mechanically using a kneader, silent cutter, or the like.

### (Step (E))

The method for producing a processed meat-like food product of the present disclosure may further include the step of (E) freezing the mixture. The temperature during freezing may be 0°C or lower, -10°C or lower, or -20°C or lower. The temperature during freezing may be -45°C or higher, -40°C or higher, or -35°C or higher. The upper limit and the lower limit of the temperature during freezing can be arbitrarily combined within the scope of the present disclosure. The method for producing a processed meat-like food product of the present disclosure may further include the step of heating or baking the mixture.

The processed meat-like food product to be obtained by the present disclosure may weigh 10 g or more, 20 g or more, or 30 g or more as a single mass. The heavier the weight as a single mass, i.e., the larger the mass size, the more likely it is to provide juiciness when chewed.

The processed meat-like food product to be obtained by the present disclosure may weigh 1000 g or less, 500 g or less, 300 g or less, 100 g or less, or 50 g or less as a single mass. The lighter the weight as a single mass, i.e., the smaller the mass size, the less likely it is to cause uneven heating, making the product suitable for eating.

The processed meat-like food product to be obtained by the present disclosure can be a processed meat-like food product with little cooking loss during baking. The processed meat-like food product with little cooking loss during baking is high in water content and tends to have a fresh texture similar to meat.

The processed meat-like food product to be obtained by the present disclosure can be a processed meat-like food product with a low deliquoring rate at break. The processed meat-like food product with a low deliquoring rate at break tends to have an excellent texture with juiciness like meat when chewed.

In the present specification, each specific matter described in one embodiment regarding each aspect of the present disclosure may be arbitrarily combined into a new embodiment, and it should be understood that such a new embodiment may also be encompassed by each aspect of the present disclosure.

### [Examples]

Hereinafter, the present disclosure will be described in more detail with reference to Examples and the like, but the present disclosure is not limited to these Examples at all.

### [Measurement Conditions]

### (Cooking Loss)

A frozen processed meat-like food product was measured for mass and then heated using an oven (MRO-FV200, manufactured by Hitachi, Ltd.) at 230°C for seven minutes, followed by measurement of the mass after heating. Cooking loss was calculated by the following equation (n = 3). Cooking loss (% by mass) = {(mass in raw state - mass after heating)/mass in raw state} ×100

### (Deliquoring Rate at Break)

A frozen processed meat-like food product was heated using an oven (MRO-FV200, manufactured by Hitachi, Ltd.) at 230°C for seven minutes, followed by measurement of the mass after heating. The processed meat-like food product was divided in half, and a cross-section of one halved processed meat-like food product was placed on a folded paper towel. The processed meat-like food product was pressed and broken from the opposite end of the cross-section using a creepmeter (RE2-33005C, manufactured by Yamaden Co., Ltd.). At that time, a cylindrical plunger with a diameter of 16 mm was used at a speed of 1 mm/s and a strain rate of 100%. Thereafter, the mass of the paper towel having absorbed the liquid was measured. A cross-section of the other half of the processed meat-like food product was similarly broken to measure the mass of the paper towel having absorbed the liquid. The masses of both paper towels were added up to calculate the deliquoring rate at break according to the following equation (n = 3). Deliquoring rate at break (% by mass) = {(mass of paper towel after liquid absorption - mass of paper towel before liquid absorption)/mass of processed meat-like food product after heating} × 100

Typically, the higher the deliquoring rate at break, the higher the juiciness of processed meat-like food product at the time of eating.

### [Investigation of Effect of Thermal Denaturation of Vegetable Protein]

Emulsified gels were prepared using the ingredients listed in Table 1 (Examples 1 and 2 and Comparative Examples 1 and 2). Note that New FUJIPRO SEH used as the low-denatured vegetable protein was an isolated soy protein. In the following Examples, the low-denatured vegetable protein is simply referred to as "vegetable protein".

**[Table 1]**

| Ingredients | | part(s) by mass |
|---|---|---|
| Vegetable protein | New FUJIPRO SEH (manufactured by Fuji Oil Co., Ltd.) | 1 |
| Water | - | 39 |
| Fat or oil | Coconut oil | 60 |

After vegetable protein and water were mixed under stirring using a mixer (TM856, manufactured by TESCOM CO., LTD.), an operation of adding 1/3 amount of melted coconut oil and mixing under stirring was repeated three times to obtain an ungelled emulsion. The obtained ungelled emulsion was divided into four equal parts, put into a pouch, confirmed to have reached different and constant temperatures using a water bath, then held at that temperature for one hour, followed by removal from the water bath, and allowed to cool to room temperature (about 25°C) by air cooling to observe the presence or absence of gelation. Furthermore, the emulsion was stored in a freezer (at a set temperature of -20°C) overnight (about 12 hours) and then returned to normal temperature (about 25°C) to observe the gelling state. The results are shown in Table 2.

**[Table 2]**

| | Comparative Example 1 | Comparative Example 2 | Example 1 | Example 2 |
|---|---|---|---|---|
| Temperature of water bath (°C) | 30 | 50 | 70 | 90 |
| Gelling state before freezing treatment | d | d | c | b |
| Gelling state after freezing treatment | a | a | a | a |

In the evaluation of the gelling state in Table 2, symbols a to d indicate the following:
a: solid, indicating gelation.
b: semi-solid, indicating that gelation relatively proceeded.
c: viscous liquid, indicating that gelation partially proceeded.
d: liquid, indicating that gelation had not proceeded or had barely proceeded.

From the results in Table 2, it can be seen that even if the content of the vegetable protein relative to the content of the fat or oil is very low at about 1.7% by mass, gelation already proceeds in the stage before the freezing treatment when the vegetable protein is thermally denatured, suggesting that when the content of the vegetable protein is higher, gelation will be achieved without the freezing treatment. In addition, under the above conditions, gelation was confirmed in all cases including Comparative Examples 1 and 2 by the freezing treatment. However, when the content of vegetable protein is lower, it is considered that the achievement of gelation after the freezing treatment depends on the presence or absence of heat denaturation of the vegetable protein. From the above, it was found that the emulsified gel could be easily prepared by thermally denaturing the vegetable protein even when the content of the vegetable protein was reduced compared with the prior art.

### [Investigation of Effect of Content of Heat-Denatured Vegetable Protein]

Emulsified gels were prepared in the same manner as in Example 2 using the ingredients listed in Table 3 (Examples 3 and 4 and Comparative Example 3). Specifically, the vegetable protein and water were mixed under stirring to obtain a mixture, and an operation of adding 1/3 amount of fat or oil to the obtained mixture and mixing under stirring was repeated three times to obtain an ungelled emulsion, which was confirmed to have reached 90°C using a water bath, then held at 90°C for one hour, followed by removal from the water bath, allowed to cool to room temperature (about 25°C) by air cooling, and stored in a freezer (at a set temperature of -20°C) overnight (for about 12 hours). The frozen emulsified gel was pulverized using a chopper (BK-220, manufactured by Bonny Co., Ltd.) to have a particle size of 9.6 mm. Hereinafter, unless otherwise specified, all the methods of preparing the emulsified gel are the same as described above.

The obtained emulsified gels were used to prepare a processed meat-like food product (hamburger steak) according to the formulations shown in Table 4. Specifically, methyl cellulose, rice flour, wheat gluten, starch, bamboo fiber, salt, sodium glutamate, sugar, black pepper, nutmeg, cold water 2, and canola oil were first added to a bowl and stirred manually. Subsequently, the textured vegetable protein previously soaked in cold water 1 was added to the bowl and stirred. Furthermore, the emulsified gel in the frozen state and the granular vegetable protein were added to the bowl and stirred to form a meat paste. 35 g of the resulting meat paste was weighed and formed into a round hamburger steak having a diameter of 4 cm. The hamburger steak was baked at 230°C for seven minutes using an oven (MRO-FV200, manufactured by Hitachi, Ltd.) and frozen in a blast chiller (-30°C). In all of Examples and Comparative Examples, it was confirmed that the core temperature was 75°C or higher when the hamburger steak was baked at 230°C for seven minutes. The results of measuring the deliquoring rate at break of the respective processed meat-like food product obtained using the emulsified gels of Examples 3 and 4 and Comparative Example 3 are shown in Table 3.

**[Table 3]**

| Ingredients | | | Example 3 | Example 4 | Comparative Example 3 |
|---|---|---|---|---|---|
| Vegetable protein | New FUJIPRO SEH (manufactured by Fuji Oil Co., Ltd.) | part(s) by mass | 0.5 | 1.0 | 2.5 |
| Water | - | part(s) by mass | 19.5 | 19.0 | 17.5 |
| Fat or oil | Coconut oil | part(s) by mass | 30.0 | 30.0 | 30.0 |
| Amount of vegetable protein | | % by mass | 1 | 2 | 5 |
| Amount of fat or oil | | % by mass | 60 | 60 | 60 |
| Amount of protein relative to amount of fat or oil | | % by mass | 1.7 | 3.3 | 8.3 |
| Deliquoring rate at break | | % by mass (standard deviation) | 4.7 (1.2) | 2.8 (0.3) | 0.8 (0.1) |

**[Table 4]**

| Ingredients | | Blending ratio (%) | Blending amount (g) |
|---|---|---|---|
| Textured vegetable protein | APEX 950 (manufactured by Fuji Oil Co., Ltd.) | 3.4 | 5.55 |
| Cold water 1 | - | 6.81 | 11.1 |
| Methyl cellulose | METOLOSE MCE-100TS (manufactured by Shin-Etsu Chemical Co., Ltd.) | 1.2 | 1.95 |
| Rice flour | Komenoko A-2 (manufactured by Gunma Rice Flour Milling Co.,Ltd.) | 2.21 | 3.6 |
| Wheat gluten | A-glu G (manufactured by Glico Nutrition Co., Ltd.) | 1.1 | 1.8 |
| Starch | TI-1 (manufactured by Matsutani Chemical Industry Co., Ltd.) | 0.92 | 1.5 |
| Bamboo fiber | UNICELL BF500 (manufactured by InterFiber sp. z o.o.) | 0.83 | 1.35 |
| Salt | - | 0.92 | 1.5 |
| Sodium glutamate | - | 0.46 | 0.75 |
| Sugar | - | 0.92 | 1.5 |
| Black pepper | - | 0.18 | 0.3 |
| Nutmeg | - | 0.18 | 0.3 |
| Cold water 2 | - | 47.47 | 77.4 |
| Canola oil | - | 4.88 | 7.95 |
| Emulsified gel | - | 13.8 | 22.5 |
| Granular vegetable protein | New FUJINIK 31 (manufactured by Fuji Oil Co., Ltd.) | 14.72 | 24 |
| Total | | 100 | 163.05 |

From the results in Table 3, it can be seen that the content of the heat-denatured vegetable protein relative to the content of the fat or oil is in the range of 0.1 to 6% by mass, resulting in a good deliquoring rate at break.

### [Investigation of Effect of Polysaccharide Addition]

Processed meat-like food products were prepared by the same procedure as in Example 3 with the same formulations as in Table 4 (Examples 5 to 9). In each Example, the emulsified gel was prepared in the same manner as in Example 3 using the ingredients listed in Table 5 and used as a granular frozen product having a particle size of 9.6 mm. Meanwhile, deacylated gellan gum, calcium lactate, native gellan gum, curdlan, and glucomannan were added and mixed under stirring after the fat or oil was added and mixed under stirring and before heating in the preparation conditions of the emulsified gel of Example 3.

Each emulsified gel was evaluated for mixing suitability (degree of prevention of emulsified gel breakage when mixed with other ingredients of processed meat-like food product). Cooking loss and deliquoring rate at break were measured for each of the processed meat-like food products thus obtained. The results are shown in Table 5. Note that symbols a to c indicate the mixing suitability as follows:
a: very good (maximum diameter of emulsified gel remaining after mixing is 8 mm or more)
b: good (maximum diameter of the emulsified gel remaining after mixing is 5 mm or more and less than 8 mm)
c: acceptable (maximum diameter of the emulsified gel remaining after mixing is 2 mm or more and less than 5 mm)

**[Table 5]**

| Ingredients | | | Exam ple 5 | Exam ple 6 | Exam ple 7 | Exam ple 8 | Exam ple 9 |
|---|---|---|---|---|---|---|---|
| Vegetable protein | New FUJIPRO SEH (manufact ured by Fuji Oil Co., Ltd.) | part(s) by mass | 1 | 1 | 1 | 1 | 1 |
| Water | - | part(s) by mass | 39 | 39 | 39 | 39 | 39 |
| Fat or oil | Coconut oil | part(s) by mass | 60 | 60 | 60 | 60 | 60 |
| Deacylate d gellan gum | KELCOGE L (manufact ured by San-Ei Gen F.F.I., Inc.) | part(s) by mass | | 0.1 | | | |
| Calcium lactate | - | part(s) by mass | | 0.1 | | | |
| Native gellan gum | KELCOGE L LT100 (manufact ured by San-Ei Gen F.F.I., Inc.) | part(s) by mass | | | 0.1 | | |
| Curdlan | manufactu red by Mitsubishi Corporatio n Life Sciences Limited | part(s) by mass | | | | 0.5 | |
| Glucoman nan | RHEOLEX RS (manufact ured by SEKISUI CHEMICA L CO., LTD.) | part(s) by mass | | | | | 0.5 |
| Mixing suitability | | | c | a | b | a | b |
| Cooking loss | | % by mass (standa rd deviati on) | 17.0 (2.2) | 17.1 (2.9) | 18.8 (2.7) | 16.7 (0.5) | 16.7 (0.7) |
| Deliquoring rate at break | | % by mass (standa rd deviati on) | 4.8 (0.3) | 3.3 (0.3) | 4.9 (0.7) | 4.2 (0.4) | 3.8 (0.3) |

From the results in Table 5, it can be seen that when the emulsified gel contains a polysaccharide, the mixing suitability is improved while maintaining a low cooking loss and a good deliquoring rate at break.

### [Investigation of Effect of Amount of Emulsified Gel Added]

Processed meat-like food products were prepared by the same procedure as in Example 3 with the formulations shown in Table 6 (Examples 10 to 12). Since the details of each ingredient are the same as in Table 4, some descriptions are omitted. The ingredients of the emulsified gel and the amounts thereof are the same as in Table 1. The emulsified gel was added and mixed as a granular frozen product. Cooking loss and deliquoring rate at break were measured for each of the processed meat-like food products thus obtained. The results are shown in Table 7.

**[Table 6]**

| Ingredients | Example 10 | | Example 11 | | Example 12 | |
|---|---|---|---|---|---|---|
| | Blendin g ratio (%) | Blendin g amount (g) | Blendin g ratio (%) | Blendin g amount (g) | Blendin g ratio (%) | Blendin g amount (g) |
| Textured vegetable protein | 3.7 | 5.55 | 3.6 | 5.55 | 3.4 | 5.55 |
| Cold water 1 | 7.4 | 11.1 | 7.1 | 11.1 | 6.8 | 11.1 |
| Methyl cellulose | 1.3 | 1.95 | 1.3 | 1.95 | 1.2 | 1.95 |
| Rice flour | 2.4 | 3.6 | 2.3 | 3.6 | 2.2 | 3.6 |
| Wheat gluten | 1.2 | 1.8 | 1.2 | 1.8 | 1.1 | 1.8 |
| Starch | 1.0 | 1.5 | 1.0 | 1.5 | 0.9 | 1.5 |
| Bamboo fiber | 0.9 | 1.35 | 0.9 | 1.35 | 0.8 | 1.35 |
| Salt | 1.0 | 1.5 | 1.0 | 1.5 | 0.9 | 1.5 |
| Sodium glutamate | 0.5 | 0.75 | 0.5 | 0.75 | 0.5 | 0.75 |
| Sugar | 1.0 | 1.5 | 1.0 | 1.5 | 0.9 | 1.5 |
| Black pepper | 0.2 | 0.3 | 0.2 | 0.3 | 0.2 | 0.3 |
| Nutmeg | 0.2 | 0.3 | 0.2 | 0.3 | 0.2 | 0.3 |
| Cold water 2 | 51.6 | 77.4 | 49.8 | 77.4 | 47.5 | 77.4 |
| Canola oil | 5.3 | 7.95 | 5.1 | 7.95 | 4.9 | 7.95 |
| Emulsified gel | 6.3 | 9.45 | 9.6 | 15 | 13.8 | 22.5 |
| Granular vegetable protein | 16.0 | 24 | 15.4 | 24 | 14.7 | 24 |
| Total | 100.0 | 150 | 100.0 | 155.55 | 100.0 | 163.05 |

**[Table 7]**

| | | Example 10 | Example 11 | Example 12 |
|---|---|---|---|---|
| Cooking loss | % by mass (standard deviation) | 15.8 (0.3) | 15.1 (0.4) | 14.5 (0.4) |
| Deliquoring rate at break | % by mass (standard deviation) | 1.6 (0.7) | 3.4 (0.6) | 4.7 (0.6) |

From the above results, it can be seen that the deliquoring rate at break can be improved while suppressing the cooking loss by increasing the amount of the emulsified gel added.

### [Investigation of Effect of Particle Size of Emulsified Gel]

Processed meat-like food products were prepared by the same procedure as in Example 3 with the same formulations as in Table 4 (Examples 13 to 15). The ingredients of the emulsified gel used and the amounts thereof are the same as in Table 1. The emulsified gel was added as a granular frozen product. At that time, a frozen product of the emulsified gel was added as granules using a chopper (BK-220, manufactured by Bonny Co., Ltd.). In Examples 13, 14, and 15, 8 mm, 9.6 mm, and 12.5 mm were selected as the pore size of the perforated plate of the chopper, respectively. Cooking loss and deliquoring rate at break were measured for each of the processed meat-like food products thus obtained. The results are shown in Table 8.

**[Table 8]**

| | | Example 13 | Example 14 | Example 15 |
|---|---|---|---|---|
| Cooking loss | % by mass (standard deviation) | 12.3 (0.5) | 12.9 (0.9) | 13.0 (1.6) |
| Deliquoring rate at break | % by mass (standard deviation) | 2.9 (0.3) | 5.3 (0.9) | 4.7 (0.7) |

From the above results, it can be seen that the deliquoring rate at break can be improved while suppressing the cooking loss by appropriately selecting the particle size of the emulsified gel.

### [Investigation of Effect of Adding Emulsified Gel as Frozen Product]

Processed meat-like food products were prepared by the same procedure as in Example 3 with the same formulations as in Table 4 (Examples 16 and 17). The ingredients of the emulsified gel used and the amounts thereof are the same as in Table 1. In Example 16, the emulsified gel after the freezing treatment was cut and refrigerated at 4°C for use. In other words, in Example 16, the emulsified gel was not added as a frozen product. In Example 17, the cut emulsified gel was used directly as a frozen product. Cooking loss and deliquoring rate at break were measured for each of the processed meat-like food products thus obtained. The results are shown in Table 9.

**[Table 9]**

| | | Example 16 | Example 17 |
|---|---|---|---|
| Cooking loss | % by mass (standard deviation) | 13.4 (0.6) | 13.2 (1.3) |
| Deliquoring rate at break | % by mass (standard deviation) | 2.4 (0.3) | 4.9 (0.3) |

From the above results, it can be seen that the addition of the emulsified gel as a frozen product significantly improves the deliquoring rate at break, which is considered to be because the addition of the frozen product prevents the emulsified gel from being broken and kneaded during mixing, resulting in a considerable amount of the emulsified gel retained appropriately uniform until eating.

The unanimous response of the five panelists confirmed that in all of Examples, the processed meat-like food products obtained as Examples had excellent juiciness that was more meat-like than that of the processed meat-like food products obtained as Comparative Examples.

### [Industrial Applicability]

The emulsified gel, method for producing an emulsified gel, processed meat-like food product, and method for producing a processed meat-like food product of the present disclosure can be suitably used in the industrial field of foods where at least a part of meat in processed meat food products is replaced with vegetable protein.

## Claims

1. An emulsified gel comprising:
a heat-denatured vegetable protein, water, and a fat or oil,
wherein a content of the heat-denatured vegetable protein relative to a content of the fat or oil is 0.1 to 6% by mass.

2. The emulsified gel according to claim 1, wherein the content of the heat-denatured vegetable protein relative to the content of the fat or oil is 1 to 3% by mass.

3. The emulsified gel according to claim 1 or 2, wherein a content of the water is 10 to 80% by mass.

4. The emulsified gel according to claim 1 or 2, wherein the content of the fat or oil is 20 to 85% by mass.

5. The emulsified gel according to claim 1 or 2, wherein the heat-denatured vegetable protein comprises a heat-denatured product of soy protein.

6. The emulsified gel according to claim 1 or 2, wherein the fat or oil comprises at least one selected from the group consisting of coconut oil, palm oil, canola oil, soybean oil, rice oil, corn oil, sesame oil, and olive oil.

7. The emulsified gel according to claim 1 or 2, further comprising a polysaccharide.

8. The emulsified gel according to claim 7, wherein a content of the polysaccharide is 0.01 to 1 parts by mass based on 100 parts by mass of a total content of the heat-denatured vegetable protein, the water, and the fat or oil.

9. The emulsified gel according to claim 1 or 2, which is a frozen product.

10. A method for producing an emulsified gel, comprising the steps of:
(A) preparing an ungelled emulsion comprising a low-denatured vegetable protein, water, and a fat or oil; and
(B) heating the ungelled emulsion at a heating temperature of 60 to 100°C to prepare an emulsified gel and/or emulsified gel precursor.

11. The method for producing an emulsified gel according to claim 10, wherein a heating time in step (B) is one minute or longer after reaching the heating temperature.

12. The method for producing an emulsified gel according to claim 10 or 11, further comprising the step of (C) freezing the emulsified gel and/or emulsified gel precursor.

13. The method for producing an emulsified gel according to claim 10 or 11, wherein a content of the low-denatured vegetable protein relative to a content of the fat or oil in the ungelled emulsion obtained in step (A) is 0.1 to 6% by mass.

14. The method for producing an emulsified gel according to claim 10 or 11, wherein a content of the water in the ungelled emulsion obtained in step (A) is 10 to 80% by mass.

15. The method for producing an emulsified gel according to claim 10 or 11, wherein a content of the fat or oil in the ungelled emulsion obtained in step (A) is 20 to 85% by mass.

16. The method for producing an emulsified gel according to claim 10 or 11, wherein the low-denatured vegetable protein comprises soy protein.

17. The method for producing an emulsified gel according to claim 10 or 11, wherein the fat or oil comprises at least one selected from the group consisting of coconut oil, palm oil, canola oil, soybean oil, rice oil, corn oil, sesame oil, and olive oil.

18. The method for producing an emulsified gel according to claim 10 or 11, wherein the ungelled emulsion obtained in step (A) further comprises a polysaccharide.

19. The method for producing an emulsified gel according to claim 18, wherein a content of the polysaccharide in the ungelled emulsion obtained in step (A) is 0.01 to 1 parts by mass based on 100 parts by mass of a total content of the low-denatured vegetable protein, the water, and the fat or oil.

20. A processed meat-like food product comprising:
a textured vegetable protein; and
an emulsified gel comprising a heat-denatured vegetable protein, water, and a fat or oil, wherein a content of the heat-denatured vegetable protein relative to a content of the fat or oil is 0.1 to 6% by mass.

21. The processed meat-like food product according to claim 20, wherein the textured vegetable protein comprises textured vegetable protein derived from at least one selected from the group consisting of a soybean, pea, and wheat gluten.

22. The processed meat-like food product according to claim 20 or 21, wherein a content of the water in the emulsified gel is 10 to 80% by mass.

23. The processed meat-like food product according to claim 20 or 21, wherein the content of the fat or oil in the emulsified gel is 20 to 85% by mass.

24. The processed meat-like food product according to claim 20 or 21, wherein the heat-denatured vegetable protein comprises a heat-denatured product of soy protein.

25. The processed meat-like food product according to claim 20 or 21, wherein the fat or oil comprises at least one selected from the group consisting of coconut oil, palm oil, canola oil, soybean oil, rice oil, corn oil, sesame oil, and olive oil.

26. The processed meat-like food product according to claim 20 or 21, wherein the emulsified gel further comprises a polysaccharide.

27. The processed meat-like food product according to claim 26, wherein a content of the polysaccharide in the emulsified gel is 0.01 to 1 parts by mass based on 100 parts by mass of a total content of the heat-denatured vegetable protein, the water, and the fat or oil.

28. The processed meat-like food product according to claim 20 or 21, wherein a content of the emulsified gel is 1 to 50% by mass.

29. The processed meat-like food product according to claim 20 or 21, wherein a deliquoring rate at break is 3 to 10% by mass.

30. A method for producing a processed meat-like food product, comprising the step of (D) mixing the following to prepare a mixture:
a textured vegetable protein; and
an emulsified gel comprising a heat-denatured vegetable protein, water, and a fat or oil, wherein a content of the heat-denatured vegetable protein relative to a content of the fat or oil is 0.1 to 6% by mass.

31. The method for producing a processed meat-like food product according to claim 30, wherein in step (D), the emulsified gel is added and mixed as a frozen product.

32. The method for producing a processed meat-like food product according to claim 30 or 31, wherein the content of the heat-denatured vegetable protein relative to the content of the fat or oil in the emulsified gel is 1 to 3% by mass.

33. The method for producing a processed meat-like food product according to claim 30 or 31, wherein a content of the water in the emulsified gel is 10 to 80% by mass.

34. The method for producing a processed meat-like food product according to claim 30 or 31, wherein the content of the fat or oil in the emulsified gel is 20 to 85% by mass.

35. The method for producing a processed meat-like food product according to claim 30 or 31, wherein the heat-denatured vegetable protein comprises a heat-denatured product of soy protein.

36. The method for producing a processed meat-like food product according to claim 30 or 31, wherein the fat or oil comprises at least one selected from the group consisting of coconut oil, palm oil, canola oil, soybean oil, rice oil, corn oil, sesame oil, and olive oil.

37. The method for producing a processed meat-like food product according to claim 30 or 31, wherein the emulsified gel further comprises a polysaccharide.

38. The method for producing a processed meat-like food product according to claim 37, wherein a content of the polysaccharide in the emulsified gel is 0.01 to 1 parts by mass based on 100 parts by mass of a total content of the heat-denatured vegetable protein, the water, and the fat or oil.

39. The method for producing a processed meat-like food product according to claim 30 or 31, wherein in step (D), a content of the emulsified gel in the mixture is 1 to 50% by mass.

40. The method for producing a processed meat-like food product according to claim 30 or 31, further comprising the step of (E) freezing the mixture.
